# EUROPÄISCHE PATENTSCHRIFT

(11) **EP 0 625 680 B1**
(45) Veröffentlichungstag und Bekanntmachung des Hinweises auf die Patenterteilung: **24.04.1996**
(21) Anmeldenummer: 93118015.2
(22) Anmeldetag: 06.11.1993
(51) Int. Cl.: F24J 3/00, B01F 15/06

(54) **Heizverfahren und Heizvorrichtung**
Heating process and apparatus
Procédé et dispositif de chauffage

(30) Priorität: 18.05.1993 DE 4316615; 09.06.1993 DE 4319176
(43) Veröffentlichungstag der Anmeldung: 23.11.1994
(73) Patentinhaber: Bormann, Wilhelm, D-21729 Freiburg (DE); FIDES Gesellschaft für FINANZPLANUNG mbH, D-23669 Timmendorfer Strand (DE)
(72) Erfinder: Bormann, Wilhelm, D-21729 Freiburg (DE)
(74) Vertreter: Richter, Werdermann & Gerbaulet

(56) Entgegenhaltungen:
- EP-A- 0 211 414
- DE-A- 3 500 821
- US-A- 4 176 969
- US-A- 4 239 679
- US-A- 4 781 151

## Beschreibung

Die Erfindung betrifft ein Heizverfahren, insbesondere für Wohnungen, unter Verwendung einer aus Kunstsstoffteilchen, insbesondere PVC-Teilchen, und einem Stabilisator bestehenden pulver- oder granulatförmigen Mischung, die in einem Trockenmischer mit Luft verwirbelt wird, wobei die Außenwand des Mischers zur Ableitung von Wärme mit Wasser umspült wird, das in einem Heizkreislauf umläuft, und eine Vorrichtung zur Durchführung dieses Verfahrens.

Das durch die DE-A-35 00 821 bekannte Verfahren beruht darauf, daß PVC-Granulat oder -pulver beim Mischen eine Erwärmung erfährt, die am Kühlmantel eines Mischers abgenommen werden kann. Um ein verhältnismäßig geringes Temperaturgefälle zwischen dem eigentlichen Wärmeerzeuger - dem Mischer - und dem Wärmeverbraucher zu erzielen, wird vorgeschlagen, dem PVC-haltigen Material einen zinnhaltigen Stoff zuzugeben und diese Mischung mehrere Tage bis mehrere Wochen zu verwirbeln und die dabei aufgrund der Zusammensetzung entstehende Wärme abzuführen. Je nach Drehzahl des für die Verwirbelung benutzten Rührwerkes kann eine höhere oder geringere Wärme erzeugt werden. Durch den Zusatz eines zinnhaltigen Salzes lassen sich aufgrund einer möglichen Hydrolyse und dem Entzug eines Teils an Wärme von der erzeugten Gesamtwärme keine hohen Wirkungsgrade erzielen. Als Wärmeerzeuger dient ein im wesentlichen zylindrisches Gefäß mit einem inneren Zylinderraum, der von einem Mantel umschlossen ist, um den herum im Abstand ein zweiter Mantel angeordnet ist, so daß in dem dazwischenliegenden Raum Wasser geführt werden kann. Am Boden des zylindrischen Gefäßes sind Mischflügel angeordnet, deren Achse unmittelbar von einem Motor angetrieben wird. Hierbei hat es sich jedoch gezeigt, daß nur im bodenseitigen Verwirbelungsbereich durch das eingesetzte Material eine Wärmeabgabe erfolgt und somit nur ein kleiner Wandbereich mit einem Kühlmantel zur Verfügung stand, um die erhaltene Wärme abnehmen und zu Heizzwecken einsetzen zu können. Hinzu kommt, daß die eingesetzte Menge an Material nicht groß sein konnte, da eine Materialverwirbelung nur im bodenseitigen Bereich des eingesetzten zylindrischen Mischers erfolgt, in dem die Mischeinrichtung angeordnet ist.

Durch die US-A-4.781.151 ist eine Vorrichtung zur Erzeugung von Wärme unter Verwendung einer verbrennungslosen Wärmequelle bekannt, bei der ein mit Flügeln versehener Rotor im zylindrischen Innenraum eines Blockes aus Aluminiumguß zur Verwirbelung einer in dem Innenraum vorgesehenen Wärmeträgerflüssigkeit angeordnet ist. Durch die Umlaufbewegung des Flügelrotors wird die mechanische Bewegungsenergie an die im Innenraum der Vorrichtung befindliche Wärmeträgerflüssigkeit abgegeben. Die durch die bewegten Moleküle der Wärmeträgerflüssigkeit entwickelten Reibungskräfte wandeln dabei die mechanische Bewegungsenergie in Wärme um. Die so erzeugte Wärme wird an die Wandfläche des Aluminiumgußblockes geleitet, in der ein Rohrleitungssystem ausgebildet ist, durch das eine weitere Wärmeträgerflüssigkeit geleitet wird, die die vom Aluminiumgußblock gespeicherte Wärme aufnimmt und über einen Wärmeaustauscher einem Verbraucher Wärme zuführt. Als Wärmeträgerflüssigkeit wird eine kompressible, niedrigviskose, wärmeaufnehmende Flüssigkeit, z.B. auf Petroleum-Basis, eingesetzt. Die Verwendung von granulierten oder pulverisierten Kunststoffen zur Wärmeerzeugung ist hier nicht vorgesehen, so daß diese wärmeerzeugende Einrichtung z.B. nicht mit Kunststoffabfällen betrieben werden kann.

Die EP-A-0 211 414 beschreibt zur Stabilisierung von PVC eine Stabilisierungsmischung aus einem Dialkyl-Zinn-Mercaptid, einem Zinksalz einer Fettsäure und einem Phosphit. Mit dieser Stabilisierungsmischung wird bei PVC-Harzen eine Farbstabilisierung und Farbverbesserung erreicht; ein Verblassen von Farben soll vermieden werden.

Es ist Aufgabe der vorliegenden Erfindung, das angegebene Verfahren und die Vorrichtung dahingehend zu verbessern, daß der Wirkungsgrad erhöht und die Einsatzzeit für das verwendete Kunststoff-Granulat pro eingesetzte Charge verlängert wird und daß auch anderweitige Kunststoffe eingesetzt werden können.

Diese Aufgabe wird durch das in dem Anspruch 1 beschriebene Verfahren gelöst, wonach als Stabilisator ein Mercaptid eingesetzt wird und die Verwirbelung in einem liegenden Behälter erfolgt. Gegenüber der in der DE-A-35 00 821 C2 angegebenen zinnhaltigen Verbindung besitzt das Mercaptid eine bessere Fähigkeit, die beim Rühren bzw. Verwirbeln entstandene Wärme an den Behältermantel abzugeben. Als zusätzliche Maßnahme wird vorgeschlagen, den Mischbehälter nicht stehend, sondern liegend anzuordnen, wodurch sich die Energie minimieren läßt, die zu einer 100%igen Verwirbelung der im Behälter vorliegenden Kunststoffteile notwendig ist. Außerdem erfolgt durch den in dem Mischbehälter angeordneten und sich über den gesamten Mischbehälterinnenraum erstreckenden Flügelmischer eine Verwirbelung des Ausgangsmaterials im gesamten Behälterraum, so daß die erzeugte Wärme gleichmäßig an die gesamte, als Kühlmantel ausgebildete Behälterwandfläche abgegeben und abgenommen wird. Die Kühlmantelfläche ist somit insgesamt größer; der Wirkungsgrad wird somit verbessert.

Vorzugsweise wird als Mercaptid ein Octyl-Zinn-Mercaptid verwendet.

Nach einer weiteren Ausgestaltung der Erfindung wird die Verwirbelung in einem liegenden Trommelbehälter durchgeführt, in dem ein Flügelmischer relativ zur Trommelinnenbehälterwand rotiert. Ein Trommelbehälter hat den Vorteil, daß keine Nischen mit nur schwacher Verwirbelung entstehen können und die Durchmischung homogen über den gesamten Querschnitt durchgeführt werden kann. Vorzugsweise wird der Flügelmischer mit einer Drehzahl von 1.450 bis 2.900 U/min. betrieben.

Abgesehen davon, daß das erfindungsgemäße Verfahren abgasfrei betrieben werden kann, kann eine weitere Einsparung auch dadurch erzielt werden, daß z.B. PVC-haltiges Material aus Abfall- und Altmaterial in Form von gebrauchten Flaschen oder ähnlichem benutzt wird. Zweckmäßigerweise wird mit der Ableitung von Wärme die Temperatur des verwirbelten Materials auf ein 160°C nicht überschreitendes Niveau begrenzt. Bevorzugt wird jedoch eine bei etwa 150°C bis 160°C liegende Begrenzungstemperatur. Hierdurch lassen sich Wärmeverluste vermeiden. Weiterhin soll der Zylinderraum zur Verwirbelung so gewählt werden, daß das Verhältnis des Durchmessers zur Länge etwa 5:8 bis etwa 5:10 bei einer Füllung, die etwa 40% bis 60% der Höhe einnimmt, ist.

Die Auswahl des Stabilisators ermöglicht auch andere Kunststoffe als Ausgangsmaterial einzusetzen als ausschließlich PVC, so daß das Verfahren auch die Verwertung andersartiger Kunststoffe ermöglicht. Es hat sich nämlich überasschend gezeigt, daß nur mit dem Einsatz eines Octyl-Zinn-Mercaptid sich auch andersartige Kunststoffe einsetzen lassen, wie z.B. Polyvinylacetate, Polypropylene, wobei es zweckmäßigerweise von Vorteil ist, wenn den andersartigen Kunststoffen z.B. ein Anteil bis zu 80 Gew.-% hinzugesetzt wird.

Die auf die Vorrichtung bezogene Aufgabe wird durch die in den Ansprüchen 10 und 11 beschriebene Vorrichtung gelöst, bei der erfindungsgemäß der vorzugsweise zylindrische Behälter liegend angeordnet ist und einen um eine horizontale Achse rotationsfähigen, sich über die ganze Behälterlänge erstreckenden und den gesamten Behälterinnenraum einnehmenden Flügelmischer aufweist. Hiermit kann praktisch über den gesamten Querschnitt der Behälterinnenraum zur Verwirbelung genutzt werden und nicht nur 90% wie bei dem stehenden Behälter nach der DE-A-35 00 821.

Weiterbildungen des Flügelmischers sind in den Unteransprüchen beschrieben. So ist der Flügelmischer vorzugsweise auf einer horizontal angeordneten, motorgetriebenen Welle befestigt, von der mehrere radial von der Welle abstehende Arme mit endseitigen Schaufelblechen abragen. Diese Schaufelbleche sind gegenüber den Armen um 30° bzw. 60°± / + / - 15° geneigt. Diese Neigung bewirkt ein schaufelartiges Fördern und Mischen der Inhaltsmenge.

Nach einer weiteren Ausgestaltung der Erfindung erstreckt sich jedes der Schaufelbleche im wesentlichen über die gesamte Innenraumlänge des Behälters und wird über mehrere vorzugsweise drei hintereinander angeordnete, radial von der Welle abstehende Arme gehalten. Hierdurch erfährt das Schaufelblech eine größtmögliche Stabilisierung bei maximiertem Wirkungsgrad über die gesamte Behälterinnenraumlänge. Bewährt hat es sich, wenn mindestens drei, vorzugsweise vier Schaufelbleche vorgesehen sind, jeweils in gleichem Winkelabstand von 120° bzw. 90°.

Ein Ausführungsbeispiel der Erfindung ist in den Zeichnungen dargestellt. Es zeigen
Fig. 1 eine Querschnittsansicht einer erfindungsgemäßen Vorrichtung,
Fig. 2 ein Ausschnitt einer Detailansicht II in Fig. 1,
Fig. 3 eine Stirnansicht des Flügelmischers und
Fig. 4 eine Seitenansicht des Flügelmischers.

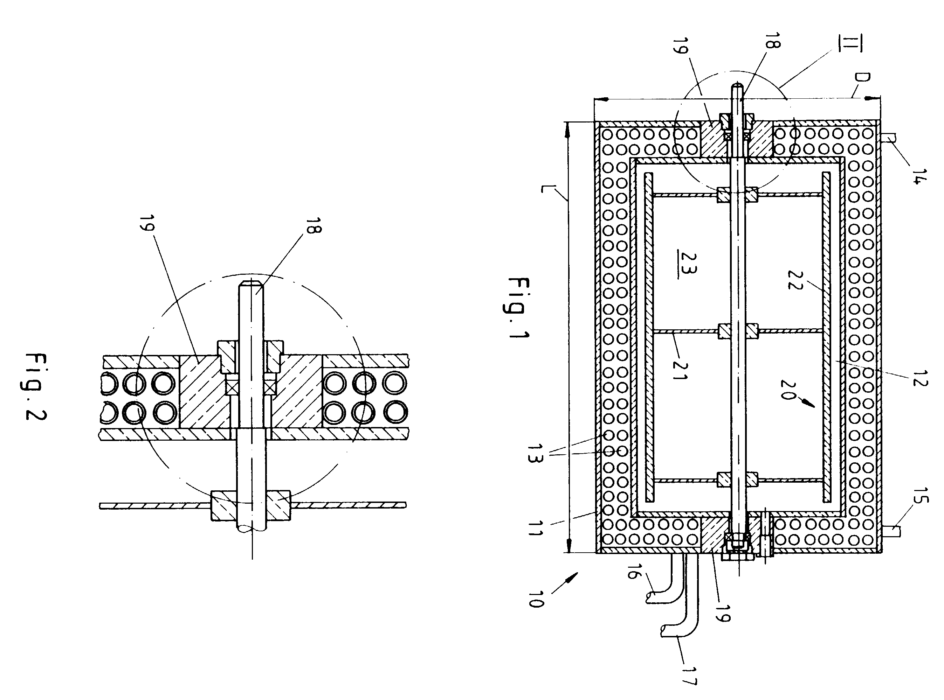

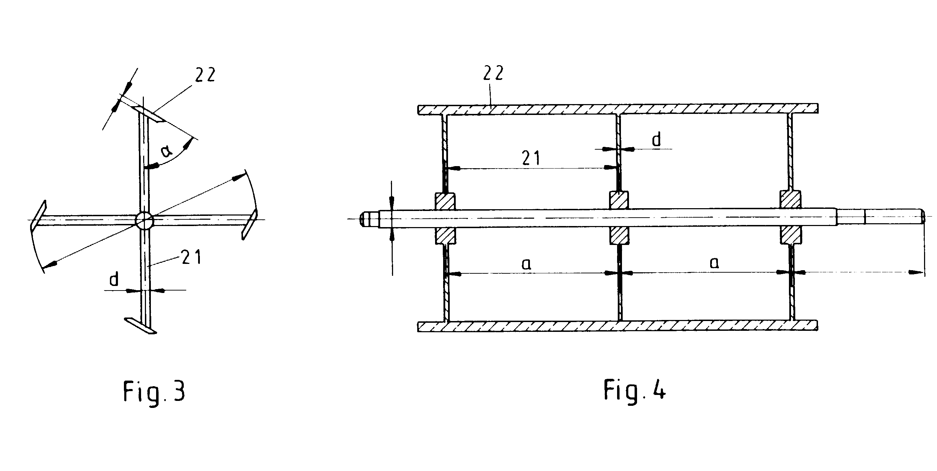

Der in Fig. 1 dargestellte Wärmeerzeuger besteht aus einem doppelwandigen Zylinderbehälter 10, der zwischen seinem Außenmantel 11 und seinem Innenmantel 12 einen Zwischenraum aufweist, in dem jeweilige Rohrschlangen 13 für Gebrauchs- und/oder Heizungswasser angeordnet sind. Der Heizungswasserzulauf ist mit 14 und der Ablauf mit 15 bezeichnet, während der Gebrauchswasserzulauf das Bezugszeichen 16 und der Gebrauchswasserablauf das Bezugszeichen 17 tragen. Der Zylinderaußenmantel 11 besitzt zweckmäßigerweise eine Länge 1 von 60 cm, während der Innenmantel eine um 10 cm kürzere Länge hat. Beide Behälter sind aus Kupfer-Blech gefertigt. Der Behälter 10 wird im Bereich seiner Längsachse von einer Welle 18 durchragt, die an der einen Seite mit einem nicht dargestellten Motor verbunden ist und in Lagerbuchsen 19 lagert. Die Welle 18 dient als Träger eines Flügelmischers 20, der sich im wesentlichen über die gesamte Innenraumlänge erstreckt. Dieser Flügelmischer 20 besitzt auf der Welle angeordnete Arme 21, die ( Fig.3) kreuzweise angeordnet sind. Jeder dieser Arme trägt an seinem äußeren Ende ein Schaufelblech 22, d.h. im Falle entsprechend Fig. 3 vier Schaufelbleche, die sich über die gesamte Innenraumlänge erstrecken und von denen jedes von jeweils drei Armen 21 gehalten wird. Die Schaufelbleche 22 sind um einen Winkel α = 30° zur Achse eines Armes geneigt. Der Arm hat eine Dicke d von etwa 0,5 cm. Die Abstände a betragen ca. 20 cm.

Der Behälterinnenraum 23 wird mit einer Mischung eines Kunststoff-, z.B. eines PVC-Pulvers oder -Granulats mit einem Stabilisator aus Octyl-Zinn-Mercaptid zur Hälfte gefüllt. Aufgrund des horizontal liegend angeordneten Behälters 10 wird ein hoher Wirkungsgrad und ein hoher Energiegewinn erhalten. Durch die Verwirbelung der Füllung bei Drehung der Welle 18 laden sich die Kunststoffmoleküle auf; die durch die statische Aufladung erzielte Wärme wird an den Innenmantel 12 abgegeben, von wo aus sie an das Wasser in den Rohren 13 geführt wird. Es wird eine 100%ige Ausnutzung des PVC-Granulats in Wärme erreicht. Von besonderem Vorteil ist, daß durch den Einsatz des genannten Stabilisators das PVC-Granulat sich nicht erschöpft und Abbaureaktionen oder Agglomerationen der PVC-Teile, insbesondere durch das eingesetzte Mercaptid, vermieden werden, das sich als Schutzhülle um die Teilchen des PVC-Granulats legt und somit das PVC-Granulat für eine längere Lebensdauer stabilisiert. Mit dem erfindungsgemäßen Verfahren und der dargestellten Vorrichtung wird eine geringere Energie benötigt, als bei dem in der DE-A-35 00 821 C2 beschriebenen Verfahren. Das Verfahren ist umweltfreundlich und wirtschaftlich, insbesondere entstehen keine Abgase wie bei der Verbrennung fossiler Stoffe.

Anstelle eines PVC-Granulats kann auch ein Pulver bzw. Granulat aus einem anderen geeigneten Kunststoff eingesetzt werden , so u.a. auch Polymere.

Die Wand des Behälters 10 besteht aus Kunststoff, zweckmässigerweise aus PVC oder einem anderweitigen, wärmeleitenden Material, wie Stahlblech, welches innenwandseitig mit einem Kunststoff, zweckmäßigerweise mit PVC, beschichtet ist. Durch das Zusammenwirken der Kunststoffanteile der eingesetzten Mischung mit der aus einem Kunststoff bestehenden Behälterwand wird die Wärmeerzeugung wesentlich verbessert. Überraschende Ergebnisse werden beim Einsatz einer Behälterwand aus einem Kunststoff erhalten, wenn in den Kunststoff ein Mercaptid, insbesondere ein Octyl-Zinn-Mercaptid, eingearbeitet ist, das retardartig über einen längeren Zeitraum an die im Behälter vorliegende Mischung während des Verwirbelungsvorganges abgegeben wird.

## Patentansprüche

1. Heizverfahren, insbesondere für Wohnungen, unter Verwendung einer aus Kunststoffteilchen, insbesondere PVC-Teilchen, und einem Stabilisator bestehenden pulver- oder granulatförmigen Mischung, die in einem Trockenmischer mit Luft verwirbelt wird, wobei die Außenwand des Mischers zur Ableitung von Wärme mit Wasser umspült wird, das in einem Heizkreislauf umläuft, dadurch gekennzeichnet, daß als Stabilisator für die Kunststoff-Teilchen ein Mercaptid verwendet wird und die Verwirbelung der Mischung in einen sich über einen waagerechten Bereich erstreckenden Verwirbelungsstrecke des liegenden Behälters in dessen gesamten Innenraum erfolgt, wobei mit der Ableitung von Wärme die Temperatur des verwirbelten Materials auf ein 160°C nicht überschreitendes, zweckmäßigerweise bei 150° bis 160°C liegendes Niveau, begrenzt wird.

2. Heizverfahren nach Anspruch 1 ,dadurch gekennzeichnet, daß das Mercaptid ein Octyl-Zinn-Mercaptid ist.

3. Heizverfahren nach einem der Ansprüche 1 und 2, dadurch gekennzeichnet, daß die Verwirbelung in einem liegenden Zylinderbehälter (10) durchgeführt wird, in dem ein sich über den gesamten Berhälterinnenraum erstreckender Flügelmischer (20) relativ zur Behälterwand mit einer Drehzahl von 1.450 bis 2.900 U/min rotiert.

4. Heizverfahren nach einem der Ansprüche 1 bis 3, dadurch gekennzeichnet, daß das kunststoff- bzw. PVC-haltige Material aus Abfall- und Altmaterial, wie gebrauchten Flaschen , besteht.

5. Heizverfahren nach einem der Ansprüche 1 bis 4, dadurch gekennzeichnet, daß anderweitigem Kunststoffmaterial ein Anteil an PVC-haltigem Material bis zu 80 Gew.-% zugemischt wird.

6. Heizverfahren nach einem der Ansprüche 1 bis 5, dadurch gekennzeichnet, daß die Verwirbelung in einem zylindrischen Behälter (10) vorgenommen wird, dessen Verhältnis vom Durchmesser D zur Länge L etwa 5:8 bis 5:9 beträgt, und der bis zu etwa 4/10 bis 6/10 der Höhe mit Material gefüllt wird.

7. Vorrichtung zur Durchführung des Verfahrens nach einem der Ansprüche 1 bis 6, bestehend aus einem doppelwandigen Behälter (10) mit einer im Behälterinnenraum (23) angeordneten Verwirbelungseinrichtung aus einem Flügelmischer (20), wobei im Zwischenraum der Doppelwandung (11,12) als Teil eines Heizkreislaufes Wasser geführt wird, dadurch gekennzeichnet, daß der vorzugsweise zylindrische Behälter (10) liegend angordnet ist und einen um eine horizontale Achse rotationsfähigen, sich über die gesamte Länge und über den gesamten Innenraum des Behälters (10) erstreckenden Flügelmischer (20) aufweist, der aus mehreren, radial von der Welle abstehenden Armen (21) mit endseitigen Schaufelblechen (22) besteht, die gegenüber den Armen (21) um 30° bzw. 60° ± 15° geneigt sind.

8. Vorrichtung nach einem Anspruche 7 , dadurch gekennzeichnet, daß der Flügelmischer (20) auf einer horizontal angeordneten, motorbetriebenen Welle (18) befestigt ist.

9. Vorrichtung nach einem der Ansprüche 7 und 8, dadurch gekennzeichnet, daß jedes der Schaufelbleche (22) sich im wesentlichen über die gesamte Innenraumlänge des Behälters (10) erstreckt und über mehrere, vorzugsweise drei, hintereinander angeordnete, radial von der Welle (18) abstehende Arme (21) gehalten wird.

10. Vorrichtung nach einem der Ansprüche 8 bis 9 , dadurch gekennzeichnet, daß mindestens drei, vorzugsweise vier, Schaufelbleche (22) vorgesehen sind.

11. Vorrichtung nach einem der Ansprüche 8 bis 10, dadurch gekennzeichnet, daß der Behälter aus Kunststoff, zweckmäßigerweise aus PVC oder aus einem anderweitigen, wärmeleitenden Material, wie Stahlblech, besteht, das mit einer innenwandseitigen Beschichtung aus einem Kunststoff, zweckmäßigerweise PVC, versehen ist.

12. Vorrichtung nach Anspruch 11, dadurch gekennzeichnet, daß als Wand des Behälters (10) bzw. als Innenwandbeschichtung ein Kunststoff mit einem eingearbeiteten Mercaptid, insbesondere einem Octyl-Zinn-Mercaptid, bzw. eine Mischung aus einem Kunststoff, zweckmäßigerweise einem PVC, und aus einem Mercaptid, insbesondere einem Octyl-Zinn-Mercaptid, eingesetzt wird.

## Claims

1. Heating process, especially for apartments, in which use is made of small plastic particles, more particularly small PVC particles and a stabilizer consisting of a pulverized or granular mixture, which is vortexed in a dry mixer with air, in which the outer wall of the mixer is circumcirculated with water for the dissipation of heat, said water circulating in a heating circuit,
**characterized in that**,
as a stabilizer for the small plastic particles, a mercaptide is employed and the vortexing is effected in a vortexing section extending over a horizontal area of the horizontally disposed container within the entire interior of the same, in which, by means of the heat dissipation, the temperature of the vortexed material is limited to a level not exceeding 160°C, but expediently within a range of between 150°C to 160°C.

2. Heating process according to Claim 1,
**characterized in that**
the mercaptide is an octyl-tin mercaptide.

3. Heating process according to either Claim 1 or 2,
**characterized in that**
the vortexing is carried out in a horizontally disposed cylindrical container (10), in which a blade paddle (20) extending over the entire container interior rotates relative to the container wall ata rotational speed of from 1.450 to 2.900 rpm.

4. Heating process according to any of Claims 1 to 3,
**characterized in that**
the material containing plastic or PVC is comprised of waste and salvaged material, such as used bottles.

5. Heating process according to any of Claims 1 to 4,
**characterized in that**
a proportion of PVC-containing material of up to 80% by weight is admixed to other plastic material.

6. Heating process according to any of Claims 1 to 5,
**characterized in that**
the vortexing is performed in a cylindrical container (10), whose ratio from the diameter D to the length L is approximately 5:8 to 5:9 and which is filled with material up approximately 4/10 to 6/10 of the height.

7. Apparatus for the performance of the process according to any of Claims 1 to 6, comprising a double-walled container (10) with a vortexing means of a blade paddle (20) disposed in the container interior (23), in which, in the interspace of the double wall (11, 12), water is carried as part of a heating circuit,
**characterized in that**
the preferably cylindrical container (10) is horizontally disposed and possesses a blade paddle (20) rotatable about a horizontal axis and extending over the entire interior of the container (10), which is comprised of several arms (21) projecting radially from the shaft with paddle wheel plates (22), which, relative to the arms (21), are inclined through 30° or 60° ± 15°.

8. Apparatus according to Claim 7,
**characterized in that**
the blade paddle (20) is mounted on a horizontally arranged, motor-driven shaft (18).

9. Apparatus according to either Claim 7 or 8,
**characterized in that**
each of the paddle wheel plates (22) substantially extends over the entire internal length of the container (10) and is retained by means of several, preferably three, successively disposed arms (21) projecting radially from the shaft (18).

10. Apparatus according to either Claim 8 or 9,
**characterized in that**
at least three, by preference four, paddle wheel plates (22) are provided.

11. Apparatus according to any of Claims 8 to 10,
**characterized in that**
the container is comprised of plastic, expediently PVC or of another, thermally conductive material, such as steel plate, which is provided with an internal wall coating of a plastic, advantageously PVC.

12. Apparatus according to Claim 11,
**characterized in that**,
as wall of the container (10) or as internal wall coating, a plastic with an incorporated mercaptide, more particularly an octyl-tin mercaptide, or a mixture of plastic, expediently a PVC and of a mercaptide, more particularly an octyl-tin mercaptide, is inserted.

## Revendications

1. Procédé de chauffage, en particulier pour des appartements, qui utilise un mélange en forme de poudre ou de granulés, constitué par des particules de plastique, en particulier des particulier des particules de PVC, et un stabilisateur, qui est tourbillonné avec de l'air dans un mélangeur à sec, la paroi extérieure du mélangeur étant baignée par de l'eau qui circule dans un circuit de chauffage pour la dissipation de la chaleur, caractérisé en ce qu'un mercaptide est utilisé comme stabilisateur pour les particules de plastique et que le tourbillonnement du mélange est effectué dans une section de tourbillonnement du réservoir couché, section qui s'étend au-dessus d'une zone horizontale, dans tout l'espace intérieur du réservoir, la température de la matière tourbillonnée étant limitée, avec la dissipation de la chaleur, à un niveau qui ne dépasse pas 160° C, et qui est situé de manière appropriée de 150° à 160° C.

2. Procédé de chauffage selon la revendication 1, caractérisé en ce que le mercaptide est un mercaptide d'étain octylique.

3. Procédé de chauffage selon l'une des revendications 1 et 2, caractérisé en ce que le tourbillonnement est exécuté dans un réservoir cylindrique (10) couché dans lequel un mélangeur à ailettes (20), qui s'étend sur tout l'intérieur du réservoir, tourne par rapport à la paroi du réservoir avec un vitesse de 1450 à 2900 tours/minute.

4. Procédé de chauffage selon l'une des revendications 1 à 3, caractérisé en ce que la matière plastique ou contenant du PVC se compose de déchets ou de produits de récupération, comme des bouteilles usées.

5. Procédé de chauffage selon l'une des revendications 1 à 4, caractérisé en ce qu'un pourcentage de matière contenant du PVC est mélangé à une autre matière plastique jusqu'à un pourcentage en poids de 80 %.

6. Procédé de chauffage selon l'une des revendications 1 à 5, caractérisé en ce que le tourbillonnement est effectué dans un réservoir cylindrique (10) dont le rapport du diamètre D et de la longueur L est d'approximativement 5:8 à 5:9 et qui est rempli de matière jusqu'à environ 4/10 à 6/10 de la hauteur.

7. Dispositif pour exécuter le procédé selon l'une des revendications 1 à 6, constitué par un réservoir à double paroi (10) avec un dispositif de tourbillonnement, placé dans l'intérieur (23) du réservoir, constitué par un mélangeur à ailettes (20), de l'eau étant conduite dans l'espace intermédiaire de la double paroi (11, 12) comme partie d'un circuit de chauffage, caractérisé en ce que le réservoir, qui est de préférence cylindrique, est placé couché et présente un mélangeur à ailettes (20) capable de rotation autour d'un axe horizontal, qui s'étend sur toute la longueur et sur tout l'espace intérieur du réservoir (10), mélangeur qui est constitué par plusieurs bras (21), qui sont écartés radialement de l'arbre, avec des pales (22) en extrémité qui sont inclinées par rapport aux bras (21) de 30° ou de 60° ± 15°.

8. Dispositif selon la revendication 7, caractérisé en ce que le mélangeur à ailettes (20) est fixé sur un arbre (18) entraîné par moteur, placé horizontalement.

9. Dispositif selon l'une des revendications 7 et 8, caractérisé en ce que chacune des pales (22) s'étend essentiellement sur toute la longueur de l'espace intérieur du réservoir (10) et est maintenue par plusieurs bras (21), de préférence trois, placés l'un derrière l'autre, qui s'écartent radialement de l'arbre (18).

10. Dispositif selon l'une des revendications 8 à 9, caractérisé en ce qu'au moins trois pales (22) sont prévues, de préférence quatre.

11. Dispositif selon l'une des revendications 8 à 10, caractérisé en ce que le réservoir en matière plastique est constitué de manière appropriée par du PVC ou une autre matière thermoconductrice, comme la tôle d'acier, qui est pourvue d'une enduction du côté de la paroi intérieure en une matière plastique, de préférence en PVC.

12. Dispositif selon la revendication 11, caractérisé en ce que comme paroi du réservoir (10) ou comme enduction de paroi intérieure on utilise une matière plastique avec un mercaptide incorporé, en particulier un mercaptide d'étain octylique, ou un mélange d'une matière plastique, de manière appropriée un PVC, et un mercaptide, en particulier un mercaptide d'étain octylique.
